# EUROPÄISCHE PATENTSCHRIFT

(11) **EP 1 644 616 B1**
(45) Veröffentlichungstag und Bekanntmachung des Hinweises auf die Patenterteilung: **25.04.2007**
(21) Anmeldenummer: 04741807.4
(22) Anmeldetag: 16.06.2004
(51) Int. Cl.: F01L 9/04, H01F 7/16, F16K 31/08

(54) **VENTILANTRIEB FÜR EIN GASWECHSELVENTIL**
VALVE DRIVE FOR A GAS EXCHANGE VALVE
MECANISME DE COMMANDE DESTINE A UNE SOUPAPE DE CHANGEMENT DES GAZ

(30) Priorität: 26.06.2003 DE 10328807; 22.01.2004 DE 102004003220
(43) Veröffentlichungstag der Anmeldung: 12.04.2006
(73) Patentinhaber: Continental Teves AG & Co. oHG, 60488 Frankfurt (DE)
(72) Erfinder: VOLZ, Peter, 64291 Darmstadt (DE)
(86) Internationale Anmeldenummer: PCT/EP2004/051123
(87) Internationale Veröffentlichungsnummer: WO 2004/113687

(56) Entgegenhaltungen:
- EP-A- 1 045 116
- EP-A- 1 215 370
- DE-C- 10 125 767
- FR-A- 2 818 430
- US-A- 5 559 378

## Beschreibung

Die Erfindung betrifft ein Ventilantrieb für ein Gaswechselventil nach dem Oberbegriff des Patentanspruchs 1.

Aus der Patentliteratur ist eine ganze Reihe von Ventilantrieben der angegebenen Art bekannt.

FR-A-2 818 430 sowie EP-A- 1 215 370 offenbaren einen Ventilantrieb der im Oberbegriff des Patentanspruchs 1 angegebenen Art, dessen Läuferplatte unmittelbar innerhalb einer Durchführung eines block- bzw. klauenförmigen Ständers längsbeweglich geführt ist, sodass es je nach Ständerkonstruktion für die Gestaltung und Führung des Läufers als auch bezüglich der am Ständer anzuordnenden Stromspulen sehr unterschiedlichen Bauformen bedarf.

Weiterhin ist aus US-A-5,559,378 ein Ventilantrieb mit einem einen Zentral- und zwei Seitenmagnetpolen versehenen Ständer bekannt, der zweiteilig ausgeführt ist, wobei die beiden Ständerteile zur Aufnahme und Führung eines zweipoligen Läufers zwischen den Ständerteilen beabstandet sind. Der Läufer bewegt sich somit bei Erregung der im einen Ständerteil integrierten Stromspulen parallel zum Ständer.

Aus EP-A-1 045 116 ist ein Ventilantrieb bekannt, dessen zwischen zwei Ständerteilen längsbeweglich geführter Läufer einen Läufersteg mit einem Koppelelement aufweist, das die Verbindung zu einem Gaswechselventil herstellt.

Grundprinzip des bereits aus dem DE 101 25 767 C1 bekannten Ventilantriebs ist, dass ein starr mit dem Gaswechselventil verbundener Läufer sich längs der gemeinsamen Achse im Magnetfeld eines Ständers bewegt.

Um wirtschaftlich ausreichend hohe Kräfte am Läufer zu erzeugen, werden entsprechend starke Magnetfelder im Luftspalt zwischen dem Ständer und dem Läufer benötigt. Hierzu müssen u.a. die Luftspalte im Magnetkreis möglichst klein sein und geeignete Stromspulen am Ständer angeordnet werden.

Darüber hinaus muss der aus dem Ständer und dem Läufer bestehende Aktuator in die vorhandenen, verhältnismäßig kleinen Bauräume, z. B. in einen Zylinderkopf eines Kfz-Verbrennungsmotors passen, weshalb die Stromspulen und die aktiven Luftspaltflächen nicht beliebig groß gebaut werden können. Die magnetischen Verluste müssen im Magnetkreis klein gehalten werden. Überdies sind aber auch gerade im Bordnetz von Kraftfahrzeugen Strom und Spannung begrenzt.

Bei den komplexen Geometrien an einem Zylinderkopf eines Verbrennungsmotors sind ganz erhebliche geometrische Toleranzen zwischen den einzelnen Funktionselementen, insbesondere zwischen dem Läufer und Ständer des Ventilantriebs einzuhalten, um ein Verklemmen oder zu große Luftspalte zu verhindern.

Überdies führen unsymmetrische Magnetfelder im Luftspalt am Läufer zu erheblichen Querkräften, die sich selbst verstärken und zu großen Reibkräften, Energieverlusten und gar zudem bereits erwähnten Verklemmen des Läufers führen können.

Da besonders bei Verbrennungsmotoren in der Aufwärm- und Abkühlphase mit erheblichen Temperaturdifferenzen an sämtlichen Motorbauteilen und damit thermisch induzierten Geometrieänderungen (an Bauteilen aus Werkstoffen mit unterschiedlicher Wärmeausdehnung und stark unterschiedlichen Temperaturen) zu rechnen ist, müssen insbesondere im Ventiltrieb die Luftspalte und Spiele aus thermischen Gründen ausreichend groß vorgehalten werden.

An den Gaswechselventilen treten Beschleunigungen bis zum 100-fachen der Erdbeschleunigung auf. Diese führen bei zu großen Bauteilspielen und im Luftspalt des Magnetkreises zu unerwünschter Geräuschentwicklung, asymmetrischen Kräften und Verschleiß im Ventilantrieb.

Außerdem sind in einem Verbrennungsmotor immer Verschleiß-, Abrieb- und Schmutzpartikel vorhanden, die zum Teil auch magnetisch sind. Diese Partikel können sich auch in den Magnetspalten des Aktuators ansammeln und zum Verklemmen des Ventilantriebs führen.

Ein erhebliches herstelltechnisches Problem stellt sowohl in einer Arbeits- als auch Kraftmaschine die Verbindung eines Gaswechselventils mit dem Ventilantrieb dar. Infolge der örtlichen und funktionellen Gegebenheiten, muss nämlich eine voneinander unabhängige Prüfbarkeit, Montage als auch Demontage des Gaswechselventils und des Ventiltriebs im Zylinderkopf gewährleistet sein.

Daher ist es die Aufgabe der vorliegenden Erfindung, ein Ventilantrieb der eingangs genannten Art derart zu verbessern, dass die vorgenannten Anforderungen erfüllt und die dargestellten Nachteile vermieden werden.

Diese Aufgabe wird erfindungsgemäß für einen Ventilantrieb der angegebenen Art durch die kennzeichnenden Merkmale des Patentanspruchs 1 gelöst.

Weitere Merkmale, Vorteile und Anwendungsmöglichkeiten der Erfindung gehen im folgenden aus den Unteransprüchen und der Beschreibung von Ausführungsbeispielen anhand mehrerer Zeichnungen hervor.

Es zeigen:
- Figur 1: einen Querschnitt durch einen Zylinderkopf, in dem ein Ventilantrieb gemäß der Erfindung angeordnet ist,
- Figur 2: eine Seitenansicht des in Figur 1 gezeigten erfindungsgemäßen Ventilantriebs,
- Figur 3: eine alternative Ausgestaltung des erfindungsgemäßen Ventilantriebs im Bereich der Läuferplatte,
- Figur 4: eine weitere Ausgestaltungsvariante des erfindungsgemäßen Ventilantriebs im Bereich der Stromspulen,
- Figur 5: eine Variante zur Ausbildung der Ständerplatten des erfindungsgemäßen Ventilantriebs,
- Figur 6: eine Draufsicht auf die zwischen einer Ständerplatte einfach gelagerten Läuferplatte,
- Figur 7: eine Draufsicht auf die zwischen einer Ständerplatte mehrfach gelagerten Läuferplatte,
- Figur 8: eine Seitenansicht der Läuferplatte im Bereich der Magnetstücke,
- Figur 9: eine Seitenansicht zweier relativ zu den Magnetstücken der Läuferplatte geneigten Ständerplatten.

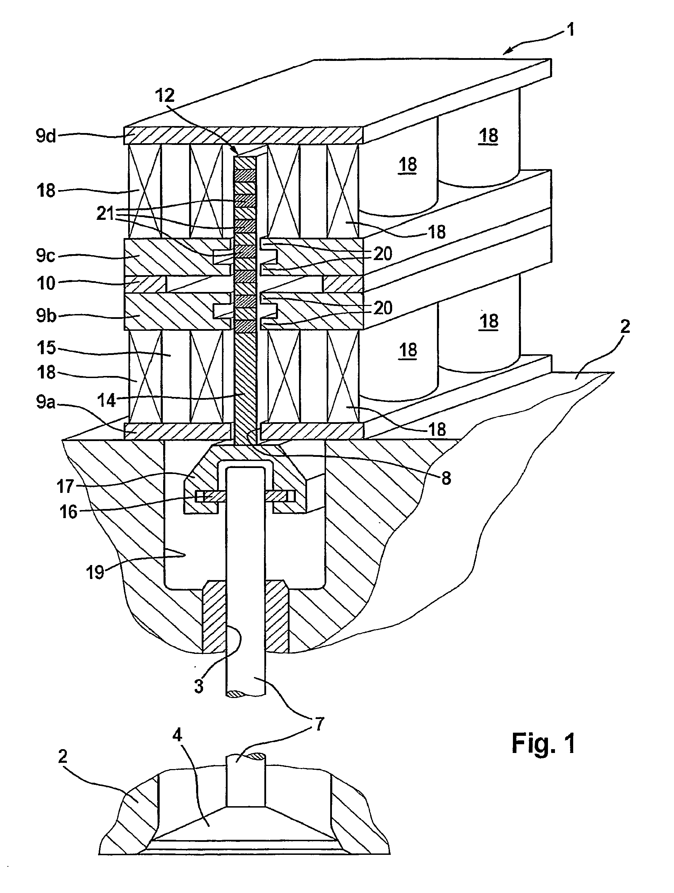

Die Figur 1 zeigt die Anordnung eines Ventilantriebs in einem Zylinderkopf 2 eines Verbrennungsmotors zwecks Betätigung eines einlass- oder auslassseitig angeordneten Gaswechselventils 4. Der im Querschnitt dargestellte Zylinderkopf 2 weist hierzu eine Ventilaufnahmebohrung 3 zur Führung und Abdichtung des Gaswechselventils 4 auf. Das Gaswechselventil 4 ist als Tellerventil ausgeführt, das mit seiner Ventilsitzfläche dem im Ein- oder Auslasskanal eingesetzten Ventilsitz konzentrisch zugewandt ist.

Als Ventilantrieb befindet sich oberhalb des Gaswechselventils 4 ein in der Ebene des Gaswechselventils im Querschnitt als auch dahinter in Perspektivansicht dargestellter elektromagnetischer Aktuator, in dessen Ständer 1 ein axialbeweglicher Läufer 12 angeordnet ist, der über ein Koppelelement 17 mit dem Ventilschaft 7 des Gaswechselventils 4 lösbar verbunden ist. Dieser als Linearmotor konzipierte Ventilantrieb gewährleistet einen variablen Ladungswechsel, in dem abhängig von der Ansteuerung mehrerer parallel im Ständer 1 angeordneter Stromspulen 18 der Ventilöffnungszeitpunkt, der Ventilhub als auch die Ventilöffnungsdauer des Gaswechselventils 4 beliebig einstellbar ist.

Der Läufer 12 bildet mit dem Ständer 1 eine eigenständig handhabbare, vorzugsweise funktionsfähig vorprüfbare Baugruppe, die mit dem Gaswechselventil 4 lösbar verbunden ist. Hierzu ist das zwischen dem Läufer 12 und dem Gaswechselventil 4 angeordnete Koppelelement 17 erforderlich, das eine kraft- und/oder formschlüssige Verbindung zwischen dem Läufer 12 und dem Gaswechselventil 4 herstellt.

Wie aus Figur 1 hervorgeht, ist der Ständer 1 mit dem Läufer 12 und dem am Läufer 12 angebrachten Koppelelement 17 gegenüber dem Gaswechselventil 4 im Zylinderkopf 2 koaxial ausgerichtet und befestigt. Zur platzsparenden Integration des Koppelelements 17 zwischen der Ventilaufnahmebohrung 3 (Ventilschaftführung des Gaswechselventils 4) und der Auflagefläche des Ständers 1 ist eine Stufenbohrung 19 im Zylinderkopf 2 vorgesehen. Zwischen dem Koppelelement 17 und dem Boden der Stufenbohrung 19 kann bei Bedarf eine Hilfsfeder angeordnet werden, um bei einem Ausfall der Stromspulen 18 zur Vermeidung eines Kolbenkontakts das Gaswechselventil 4 sicher wieder schließen zu können.

Der Läufer 12 ist als schmale Läuferplatte 11 ausgeführt, in die mehrere, konzentrisch übereinander gestapelten Magnetstücke 21 eingesetzt sind, die eine abwechselnde Magnetorientierung aufweisen. Die Magnetstücke 21 sind in einem radialen Luftspalt zum beiderseits der Läuferplatte 11 angeordneten Zahnbereich 20 des Ständers 1 angeordnet, der jeweils zwischen den Stromspulen 18 zwei zueinander fluchtende, den ebenen Magnetstücken 21 zugewandte, linear zur Läuferplatte 11 positionierte Zähne im Innenbereich der Ständerplatten 9b, 9c aufweist. Unabhängig von der Anzahl der Zähne gewährleistet die gewählte Anordnung, dass die in mehreren Reihen in der Läuferplatte 11 positionierten Magnetstücke 21 entsprechend ihrer Magnetorientierung immer mit den zugeordneten Zähnen der Ständerplatten 9b, 9c fluchten. Der vorbeschriebene Aufbau des Ständers 1 sieht eine Vielzahl von Stromspulen 18 beiderseits der Läuferplatte 11 zwischen den quer zur Läuferplatte 11 ausgerichteten vier Ständerplatten 9a, 9b, 9c, 9d vor, wobei die Stromspulen 18 vorteilhaft auch unabhängig voneinander elektrisch ansteuerbar sind.

Der Ständer 1 ist derart aufgebaut, dass immer zwei baugleiche, mit ihren Zahnbereichen 20 übereinander angeordnete Ständerplatten 9b, 9c fluchtend zueinander gestapelt und durch Abstandshalter 10 voneinander getrennt sind. Die als Bodenplatte am Zylinderkopf 2 aufliegende und das Grundjoch bildende erste Ständerplatte 9a unterscheidet sich von den darüber angeordneten drei Ständerplatten 9b, 9c, 9d durch ihre vertikale, im Querschnitt schlitzförmige Durchführung 8 für den Läufer 12, dessen Läuferplatte 11 sich in den Zahnbereich 20 der beiden Ständerplatten 9b, 9c erstreckt, die als Polschuhe wirken. Die vierte Ständerplatte 9d bildet oberhalb des Läufers 12 und der Stromspulen 18 gewissermaßen das Abschlussjoch des Ständers 1.

Die Figur 1 stellt somit einen Ventilantrieb für ein Gaswechselventil in einer Kraft- oder Arbeitsmaschine dar, dessen magnetischer Läufer 12 sich mit einem vom Gaswechselventil entfernt gelegenen Läuferabschnitt innerhalb einer Durchführung 8 eines mit mehreren Stromspulen 18 versehenen Ständers 1 längsbeweglich erstreckt. Erfindungsgemäß ist der Läufer 12 im Bereich des Läuferabschnitts vorzugsweise nach Art eines Flachschiebers als im Ständer 1 vertikal bewegte Läuferplatte 11 ausgeführt, in der in mehreren Ebenen mehrere Magnetstücke 21 ausgerichtet sind.

Im Bodenbereich des Ständers 1, der dem Gaswechselventil 4 zugekehrt ist, ist wenigstens eine an die Querschnittskontur der Läuferplatte 11 angepasste Durchführung 8 vorgesehen, durch die sich ein die Läuferplatte 11 mit dem Koppelelement 17 verbindender Läufersteg 14 erstreckt. Der Bodenbereich des Ständers 1 ist herstelltechnisch besonders einfach als rechteckige, ebene erste Ständerplatte 9a ausgeführt, die mittig auf ihrer Längsachse die Durchführung 8 für den Läufersteg 14 aufweist. Beiderseits der Durchführung 8 lassen sich auf der ersten Ständerplatte 9a reihenweise die erforderlichen Stromspulen 18 besonders einfach anordnen, auf denen die zweite ebene Ständerplatte (9b) aufgelegt ist, die wenigstens eine zur ersten Durchführung 8 fluchtende zweite Durchführung 8 im Zahnbereich (20) aufweist, die an den Querschnitt der Läuferplatte 11 angepasst ist. Oberhalb der von den Stromspulen 18 abgewandten Seite der zweiten Ständerplatte 9b ist die identisch zur zweiten Ständerplatte 9b aufgebaute dritte Ständerplatte 9c fluchtend zur zweiten Ständerplatte 9b angeordnet. Die dritte Ständerplatte 9c ist durch wenigstens ein paar unmagnetische Abstandshalter 10 von der zweiten Ständerplatte (9b) getrennt. Auf der dritten Ständerplatte 9c sind analog zu den unterhalb der zweiten Ständerplatte 9b angeordneten Stromspulen 18 gleichfalls mehrere Stromspulen 18 in einer Reihe beiderseits der Läuferplatte 11 aufgesetzt, auf denen die vierte Ständerplatte 9d fixiert ist. Jede Stromspule 18 ist von einem stabförmigen Magnetkern 15 durchdrungen, der zur Schließung des Magnetkreises mit seinen Enden die den Stromspulen 18 zugehörigen Ständerplatten 9a, 9b bzw. 9c, 9d kontaktiert.

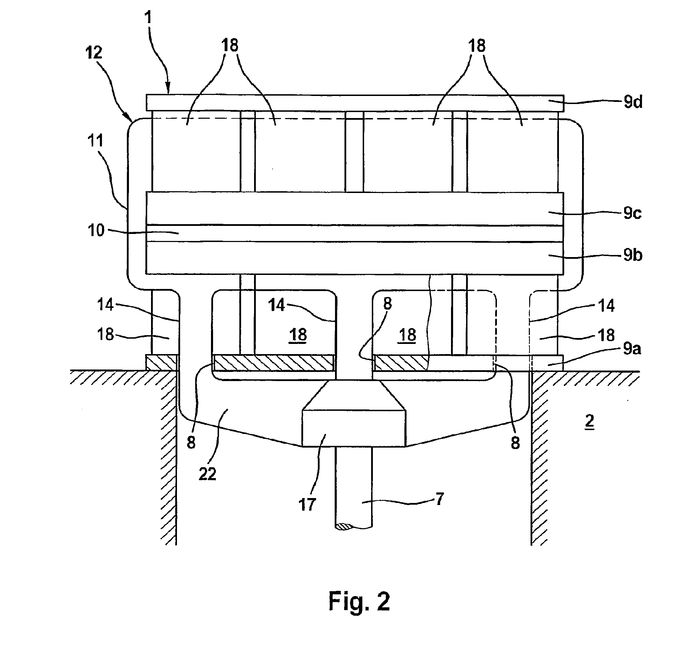

Die Figur 2 zeigt eine Seitenansicht des in Figur 1 abgebildeten Ventilantriebs, woraus ersichtlich ist, dass die erste Ständerplatte 9a im vorliegenden Ausführungsbeispiel mit drei Durchführungen 8 versehen ist, die an die Kontur der drei Läuferstege 14 spielbehaftet angepasst sind. Die durch die Durchführungen 8 ragenden Läuferstege 14 sind etwa auf der Höhe der zweiten Ständerplatte 9b vollflächig zu dem die Magnetstücke 21 tragenden Bereich der Läuferplatte 11 zusammengeführt, deren Magnetstücke 21 in der Seitenansicht nach Figur 2 von den Stromspulen 18, der zweiten und dritten Ständerplatte 9b, 9c als auch vom dazwischen befindlichen Abstandshalter 10 verdeckt sind. Unterhalb der ersten Ständerplatte 9a sind die Läuferstege 14 gleichfalls zu einem massiven Verbindungsabschnitt 22 zusammengeführt, welches das Koppelelement 17 aufnimmt.

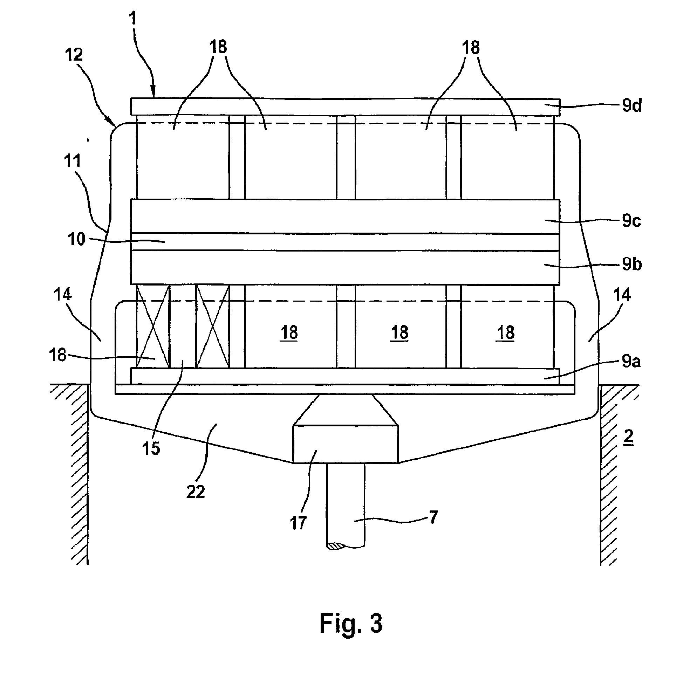

Die Figur 3 zeigt abweichend von Figur 2 die an den beiden Enden des Verbindungsabschnitts 22 angeformten Läuferstege 14, welche die erste Ständerplatte 9a spielbehaftet in Richtung auf den die Magnetstücke 21 aufweisenden Bereich der Läuferplatte 11 umgreifen. Dies hat den Vorteil, dass die aus den Fig. 1, 2 bekannten Durchführungen 8 in der ersten Ständerplatte 9a nicht erforderlich sind. Ansonsten entspricht der Aufbau des Ventiltriebs nach Figur 3 den bisherigen, anhand den Figuren 1, 2 dargelegten Einzelheiten.

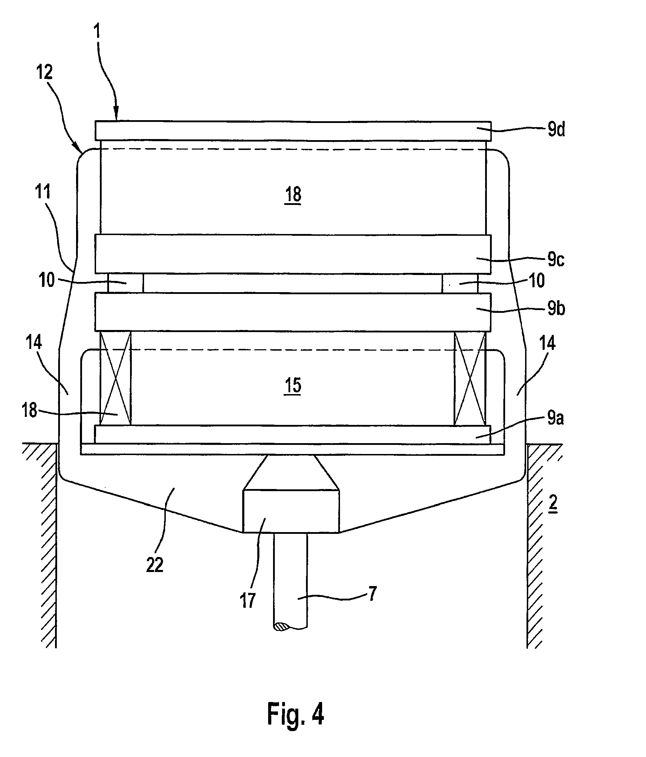

Die Figur 4 zeigt abweichend von den bisherigen Erläuterungen zum Erfindungsgegenstand anstelle der Verwendung einer Vielzahl von nebeneinander angeordneten zylindrischen Stromspulen 18 die Verwendung von lediglich einem paar übereinander angeordneten ovalen Stromspulen 18 je Läuferplattenseite, so dass anstelle der stabförmigen Magnetkerne in den zylindrischen Stromspulen 18 nunmehr entsprechend der Ovalität der Stromspulen 18 die Magnetkerne 15 nunmehr den Zwischenabstand innerhalb jeder ovalen Stromspule 18 ausfüllen.

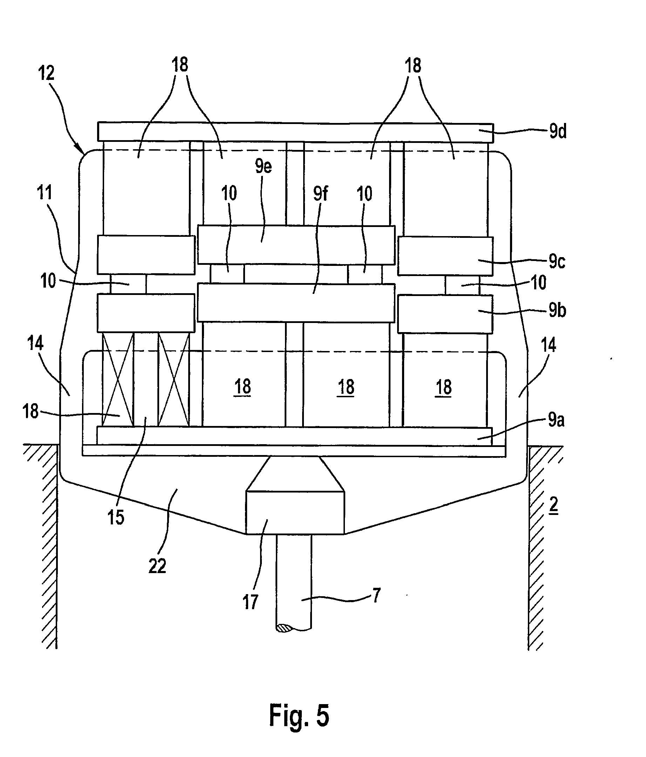

Wie aus der Figur 5 hervorgeht, können bei Wunsch oder Bedarf die zweite und dritte Ständerplatte 9b, 9c mehrteilig und in ihren Ebenen auch versetzt ausgeführt sein, so dass mehrpolige Ständerplatten bei relativ kleinem Platzbedarf realisiert werden können.

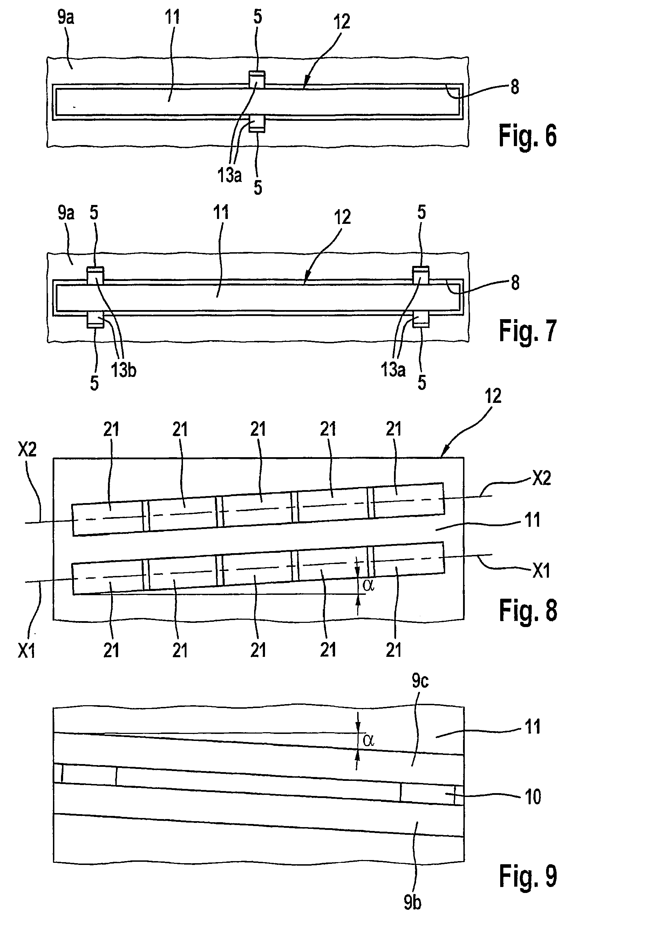

Die Figur 6 zeigt ausgehend von den Beschreibungen zu den Fig. 1-5 eine Draufsicht auf die das Grundjoch bildende erste Ständerplatte 9a, die als Bodenplatte am Zylinderkopf 2 aufliegt, welche in der vorliegenden Ansicht nur teilweise im Bereich ihrer schlitzförmigen Durchführung 8 skizzenhaft dargestellt ist. Diese Ständerplatte 9a nimmt auf halber Teilspannweite beiderseits der in der Draufsicht gezeigten schmalen Läuferplatte 11 entweder unmittelbar an der Läuferplatte 11 oder im Bereich des Läuferstegs 14 ein paar Führungselemente 13a auf, die in Nuten 5 der Ständerplatte 9a eingesetzt sind. Hierdurch wird eine besonders einfache und dennoch präzise, klemmfreie Führung des Läufers 12 im Ständer 1 erreicht.

Die Figur 7 zeigt eine gegenüber der Figur 6 mehrfache Lagerung und Führung des Läufers 12 innerhalb der Durchführung 8 der ersten Ständerplatte 9a, wozu an den beiden äußeren Abschnitten des Läufers 12 die Führungselemente 13a, 13b beiderseits des plattenförmigen Läufers 12 in Nuten 5 der Ständerplatte 9a angeordnet sind.

Die Figur 8 zeigt ergänzend zu den Figuren 1 bis 7 in einer Seitenansicht die teilweise abgebildeten Läuferplatte 11, mit mehreren Magnetstücken 21, die in mehreren parallel übereinander angeordneten Magnetreihen X1, X2 der Läuferplatte 11 angeordnet sind, wobei die Magnetreihen X1, X2 gegenüber der horizontalen Ausrichtung des Zahnbereichs 20 geneigt sind.

Alternativ zu Figur 8 sind in der Figur 9 die Magnetstücke 21 in der Läuferplatte 11 in mehreren parallel übereinander angeordneten Magnetreihen X1, X2 horizontal aufgenommen, während die mit den Zahnbereichen 20 versehenen Ständerplatten 9b, 9c gegenüber den Magnetreihen X1, X2 geneigt sind.

Die in den Figuren 7 und 8 vorgeschlagenen Konstruktionen verbessern den Übergang des elektromagnetischen Kraftflusses während der Relativbewegung des Läufers 12 im Stator 1, wodurch sich eine effizientere Ausnutzung der Magnetkraft ergibt.

Zusammenfassend zeichnet sich der erfindungsgemäß vorgeschlagene Ventilantrieb durch folgende Merkmale aus:
1. Durch die Ausbildung des Läufers 12 nach Art eines Flachschiebers ergibt sich eine extrem schmale Baubreite für den Ventilantrieb, so dass dieser unproblematisch in jedem Zylinderkopf integriert werden kann.
2. Der Magnetkreis kann optimal an die Leistungsbedürfnisse des Ventilantriebs angepasst werden, indem auf einfache Bauweise nach Belieben die Anzahl, die Bauweise und die elektrische Ansteuerung der Stromspulen 18 variiert werden kann. Durch die einfache Statorgeometrie, die u.a. durch die Verwendung der vorgestellten Ständerplatten 9a-d zustande kommt, können nicht nur zylindrische, sondern auch ovale Stromspulen 18 verwendet werden. Bei der Verwendung von mehreren zylindrischen Stromspulen 18 lässt sich ein besonders kleiner Spulendurchmesser realisieren, so dass der Kupferaufwand als auch die damit verbundenen Einfluss auf den Wirkungsgrad im Stromkreis minimal ist. Folglich kann der Aktuator mit einer geringeren elektrischen Spannung betrieben werden. Die Stromspulen lassen sich jeweils nach der gewünschten Betriebskennlinie parallel, seriell oder sequentiell elektrisch bestromen, wodurch die Möglichkeit zur Rückgewinnung von elektrischer Energie aus der jeweils vorherrschenden elektromotorischen Kraft innerhalb der Magnetkreise besteht. Ferner ergibt sich eine nur geringe Streuung des Magnetfelds.
3. Durch die zum Läufer 12 ausschließlich seitlich angeordneten Stromspulen 18 ergibt sich eine gute Spulenkühlung und eine besonders einfache Montage als auch Demontage der Stromspulen 18.
4. Es folgt eine von thermisch induzierten Geometrieveränderungen unabhängige Führung des Läufers 12, wobei Wärmedehnungen zwischen Läufer 12 und Ständer 1 keinen Einfluß auf die Führung haben. Durch die hierzu vorgeschlagene Verwendung von Führungselementen 13a, 13bwird der Läufer 12 auch in einem kritischen Luftspaltbereich sicher geführt und gegen die dort wirkenden hohen magnetischen Querkräfte sowie gegen die Querbeschleunigungskräfte abgestützt. Die hierzu verwendete Anzahl der Führungselemente kann zwischen zwei und einem Vielfachen variieren.

Die vorgeschlagene Erfindung gewährleistet somit:
- Wirtschaftliche Fertigungstoleranzen
- Wirtschaftliche Montage und automatische Justierung des Ventilantriebs
- Geringe Verluste im Magnetkreis
- Hohen Wirkungsgrad, da der Ventilantrieb optimal einstell bar ist und nur geringe Reibkräfte aufweist
- Thermisch stabile Betriebsweise des Ventilantriebs auch in der Hochlauf- und Abkühlphase des Motors
- Einfacher Werkstattservice

### Bezugszeichenliste

- 1: Ständer
- 2: Zylinderkopf
- 3: Ventilaufnahmebohrung
- 4: Gaswechselventil
- 5: Nut
- 6: Langloch
- 7: Ventilschaft
- 8: Durchführung
- 9a-d: Ständerplatte
- 10: Abstandshalter
- 11: Läuferplatte
- 12: Läufer
- 13a: Führungselement
- 13b: Führungselement
- 14: Läufersteg
- 15: Magnetkern
- 16: Klemmring
- 17: Koppelelement
- 18: Stromspule
- 19: Stufenbohrung
- 20: Zahnbereich
- 21: Magnetstück
- 22: Verbindungsabschnitt

## Patentansprüche

1. Ventilantrieb für ein Gaswechselventil (4) in einer Kraft- oder Arbeitsmaschine, mit einem magnetischen Läufer (12), der sich mit einem vom Gaswechselventil (4) entfernt gelegenen Läuferabschnitt innerhalb einer Durchführung (8) eines mit einer Stromspule (18) versehenen Ständers (1) längsbeweglich erstreckt, der einen ein Magnetjoch bildenden Zahnbereich (20) aufweist, sowie mit einem aus dem Ständer (1) in Richtung des Gaswechselventils (4) hervorstehenden Ende des Läufers (12), der bei Erregung der Stromspule (18) das Gaswechselventil betätigt, wobei der Läufer (12) im Bereich des Läuferabschnitts vorzugsweise nach Art eines Flachschiebers als im Ständer (1) vertikal bewegte Läuferplatte (11) ausgeführt ist, in der mehrere Magnetstücke (21) ausgerichtet sind, **dadurch gekennzeichnet, dass** der Ständer (1) mehrere fluchtend zueinander gestapelte Ständerplatten (9a-9d) aufweist, wobei wenigstens im Bereich der Durchführung (8) in einer der Ständerplatten (9a-9c) mindestens ein paar Führungselemente (13a, 13b) angeordnet sind, die beiderseits an der Läuferplatte (11) oder an einem Läufersteg (14) zumindest abschnittsweise anliegen und den Läufer (12) in der Durchführung (8) klemmfrei ausrichten.

2. Ventilantrieb nach Anspruch 1, **dadurch gekennzeichnet, dass** die Magnetstücke (21) in der Läuferplatte (11) in mehreren Ebenen ausgerichtet sind.

3. Ventilantrieb nach Anspruch 1, **dadurch gekennzeichnet, dass** der Bodenbereich des Ständers (1) dem Gaswechselventil (4) zugekehrt ist und wenigstens eine an die Querschnittskontur der Läuferplatte (11) angepasste Durchführung (8) aufweist, durch die sich wenigstens der die Läuferplatte (11) mit einem Koppelelement (17) verbindender Läufersteg (14) erstreckt.

4. Ventilantrieb nach Anspruch 3, **dadurch gekennzeichnet, dass** der Bodenbereich des Ständers (1) als rechteckige, ebene erste Ständerplatte (9a) ausgeführt ist, die mittig auf ihrer Längsachse die Durchführung (8) für den Läufersteg (14) aufweist.

5. Ventilantrieb nach Anspruch 4, **dadurch gekennzeichnet, dass** beiderseits der Durchführung (8) auf der ersten Ständerplatte (9a) wenigstens ein paar Stromspulen (18) angeordnet sind, auf denen eine zweite ebene Ständerplatte (9b) aufgelegt ist, die wenigstens eine zur ersten Durchführung (8) äquivalente als auch dazu fluchtende zweite Durchführung (8) mit einem beiderseits der zweiten Ständerplatte (9b) angeordneten Zahnbereich (20) aufweist,

6. Ventilantrieb nach Anspruch 5, **dadurch gekennzeichnet, dass** oberhalb der von den Stromspulen (18) abgewandten Seite der zweiten Ständerplatte (9b) eine dritte Ständerplatte (9c) angeordnet ist, die durch wenigstens ein paar Abstandshalter (10) von der zweiten Ständerplatte (9b) getrennt ist.

7. Ventilantrieb nach Anspruch 6, **dadurch gekennzeichnet, dass** in der dritten Ständerplatte (9c) eine Durchführung (8) mit einem Zahnbereich (20) vorgesehen ist, die fluchtend zur ersten und zweiten Durchführung (8) ausgerichtet ist.

8. Ventilantrieb nach Anspruch 6, **dadurch gekennzeichnet, dass** auf der dritten Ständerplatte (9c) wenigstens ein paar Stromspulen (18) aufgesetzt sind, auf denen eine den zweiten Endbereich des Ständers (1) bildende Endplatte (9d) aufgelegt ist.

9. Ventilantrieb nach Anspruch 1, **dadurch gekennzeichnet, dass** die Führungselemente (13a, 13b) entweder in Nuten (5) der Ständerplatte (9a, 9b, 9c) oder in Nuten der Läuferplatte (11) eingesetzt sind.

10. Ventilantrieb nach einem der vorangegangenen Ansprüche, **dadurch gekennzeichnet, dass** jede Stromspule (18) von einem stabförmigen Magnetkern (15) durchdrungen ist, der zur Schließung des Magnetkreises mit seinen Enden die der Stromspule (18) zugehörigen Ständerplatten (9a, 9b bzw. 9c, 9d) kontaktiert.

11. Ventilantrieb nach Anspruch 1, **dadurch gekennzeichnet, dass** mehrere Magnetstücke (21) in mehreren parallel übereinander angeordneten Magnetreihen (X1, X2) in der Läuferplatte (11) aufgenommen sind, wobei die Magnetreihen gegenüber der horizontalen Ausrichtung des Zahnbereichs (20) geneigt sind.

12. Ventilantrieb nach Anspruch 1, **dadurch gekennzeichnet, dass** mehrere Magnetstücke (21) in der Läuferplatte (11) in mehreren parallel übereinander angeordneten Magnetreihen (X1, X2) aufgenommen sind, wobei die Magnetreihen (X1, X2) horizontal in der Läuferplatte (11) ausgerichtet sind, während zumindest ein paar mit den Zahnbereichen (20) versehene Ständerplatten (9b, 9c) gegenüber den Magnetreihen (X1, X2) geneigt sind.

13. Ventilantrieb nach Anspruch 1, **dadurch gekennzeichnet, dass** die Läuferplatte (11) zwischen zwei Läuferstegen (14) ein Langloch (6) aufweist, das zur Aufnahme einer dem Ständer (1) zugehörigen ersten Ständerplatte (9a) an die Länge und Dicke der Ständerplatte (9a) spielbehaftet angepasst ist.

14. Ventilantrieb nach Anspruch 13, **dadurch gekennzeichnet, dass** das zwischen der Dicke der Ständerplatte (9a) und dem Langloch (6) bestehende Spiel mindestens so groß ist wie der Arbeitshub des Läufers (12).

## Claims

1. A valve drive for a gas exchange valve (4) in a power engine or processing engine, with a magnetic rotor (12) which, with a rotor section positioned at a distance from the gas exchange valve (4), extends in a longitudinally movable manner inside a bushing (8) of a stator (1) provided with a current coil (18), which stator has a tooth area (20) forming a magnetic frame, as well as with one end of the rotor (12) projecting out of the stator (1) in the direction of the gas exchange valve (4), which rotor (12), upon the excitation of the current coil (18), activates the gas exchange valve, the said rotor (12), in the area of the rotor section, being constructed in the stator (1) as a vertically moved rotor plate (11), preferably in the type of a flat-body slide valve, in which several magnetic parts (21) are oriented,
**characterized in that** the stator (1) includes a number of stacked stator plates (9a-9c) being in alignment with each other, with at least in the area of the bushing (8), at least one pair of guide elements (13a, 13b) is positioned in one of the stator plates (9a-9c), which elements fit closely on both sides of the rotor plate (11) or on the rotor bar (14), at least in sections, and orient the rotor (12) in the bushing (8) in a clamping-free manner.

2. A valve drive in accordance with claim 1, **characterized in that** the magnetic parts (21) are oriented in the rotor plate (11) in several planes.

3. A valve drive in accordance with claim 1, **characterized in that** the base area of the stator (1) faces the gas exchange valve (4) and includes at least one bushing (8) adjusted to the cross-sectional contour of the rotor plate (11), through which bushing at least one rotor bar (14) connecting the rotor plate (11) with a coupling element (17) extends.

4. A valve drive in accordance with claim 3, **characterized in that** the base area of the stator (1) is designed as a rectangular, level first stator plate (9a), which has the bushing (8) for the rotor bar (14) on the centre of its longitudinal axis.

5. A valve drive in accordance with claim 4, **characterized in that** on both sides of the bushing (8), at least one pair of current coils (18) is positioned on the first stator plate (9a), on which coils a second level stator plate (9b) is applied, which has at least one second bushing (8) equivalent to the first bushing (8) as well as aligning with the same, with a tooth area (20) positioned on both sides of the second stator plate (9b).

6. A valve drive in accordance with claim 5, **characterized in that** above the side of the second stator plate (9b) oriented away from the current coils (18), a third stator plate (9c) is positioned, which is separated from the second stator plate (9b) by means of at least one pair of spacers (10).

7. A valve drive in accordance with claim 6, **characterized in that** a bushing (8) with a tooth area (20) is provided in the third stator plate (9c), which bushing is oriented to align with the first and the second bushing (8).

8. A valve drive in accordance with claim 6, **characterized in that** at least one pair of current coils (18) is placed on the third stator plate (9c), on which coils an end plate (9d) forming the second end area of the stator (1) is placed.

9. A valve drive in accordance with claim 1, **characterized in that** the guide elements (13a, 13b) are inserted either into grooves (5) of the stator plate (9a, 9b, 9c) or into grooves of the rotor plate (11).

10. A valve drive in accordance with one of the preceding claims, **characterized in that** every current coil (18) is penetrated by a rod-shaped magnetic core (15) which, for the closing of the magnetic circuit with its ends, contacts the stator plates (9a, 9b or 9c, 9d, respectively) corresponding to the current coil (18).

11. A valve drive in accordance with claim 1, **characterized in that** several magnetic parts (21) are positioned in several series of magnets (X1, X2) in the rotor plate (11) positioned in parallel one above the other, with the series of magnets (X1, X2) being inclined opposite to the horizontal orientation of the tooth area (20).

12. A valve drive in accordance with claim 1, **characterized in that** several magnetic parts (21) in the rotor plate (11) are accommodated in several series of magnets (X1, X2) positioned in parallel, one above the other, with the series of magnets (X1, X2) being oriented horizontally in the rotor plate (11), while at least one pair of stator plates (9b, 9c) provided with tooth areas (20) is inclined opposite the series of magnets (X1, X2).

13. A valve drive in accordance with claim 1, **characterized in that** the rotor plate (11) has an oblong slot (6) between two rotor bars (14), which slot, for the accommodation of a first stator plate (9a) corresponding to the stator (1), is adjusted to the length and the thickness of the stator plate (9a) in a manner corresponding to the clearance.

14. A valve drive in accordance with claim 13, **characterized in that** the clearance existing between the thickness of the stator plate (9a) and the oblong slot (6) is at least as large as the working stroke of the rotor (12).

## Revendications

1. Commande de soupape pour une soupape d'échange des gaz (4) dans une machine productrice d'énergie ou de travail, comportant un rotor magnétique (12) qui s'étend, par un segment de rotor situé éloigné de la soupape d'échange des gaz (4), de manière à se déplacer à l'intérieur d'un passage (8) d'un stator (1) pourvu d'une bobine électrique (18), qui présente une zone dentée (20) formant une culasse magnétique, ainsi qu'avec une extrémité du rotor (12) ressortant du stator (1) en direction de la soupape d'échange des gaz (4), qui actionne la soupape d'échange des gaz lorsque la bobine électrique (18) est excitée, le rotor (12) étant réalisé dans la zone du segment de rotor, de préférence à la manière d'un coulisseau plat sous la forme d'une plaque de rotor (11) déplacée verticalement dans le stator (1), plaque dans laquelle sont orientées plusieurs pièces magnétiques (21), **caractérisée en ce que** le stator (1) comporte plusieurs plaques de stator (9a-9d) empilées alignées les unes avec les autres, au moins dans la zone du passage (8) étant disposée, dans l'une des plaques de stator (9a-9c), au moins une paire d'éléments de guidage (13a, 13b) qui s'applique au moins par endroits des deux côtés contre la plaque de rotor (11) ou contre une barrette (14) du rotor et oriente le rotor (12) sans coincement dans le passage (8).

2. Commande de soupape selon la revendication 1, **caractérisée en ce que** les pièces magnétiques (21) sont orientées dans plusieurs plans dans la plaque de rotor (11).

3. Commande de soupape selon la revendication 1, **caractérisée en ce que** la zone du fond du stator (1) est tournée vers la soupape d'échange des gaz (4) et présente au moins un passage (8) adapté au contour de la section transversale de la plaque de rotor (11), à travers lequel s'étend au moins la barrette (14) du rotor reliant la plaque de rotor (11) à un élément de couplage (17).

4. Commande de soupape selon la revendication 3, **caractérisée en ce que** la zone du fond du stator (1) est réalisée sous la forme d'une première plaque de stator (9a) plane et rectangulaire, qui présente au centre, sur son axe longitudinal, le passage (8) pour la barrette de rotor (14).

5. Commande de soupape selon la revendication 4, **caractérisée en ce que** des deux côtés du passage (8), sur la première plaque de stator (9a), est disposée au moins une paire de bobines électriques (18) sur lesquelles est placée une deuxième plaque de stator (9b) plane qui présente au moins un second passage (8) équivalant au premier passage (8) et aligné avec celui-ci, avec une zone dentée (20) disposée des deux côtés de la deuxième plaque de stator (9b).

6. Commande de soupape selon la revendication 5, **caractérisée en ce qu'**au-dessus du côté tourné à l'opposé des bobines électriques (18), de la deuxième plaque de stator (9b), est disposée une troisième plaque de stator (9c) qui est séparée de la deuxième plaque de stator (9b) par au moins une paire d'écarteurs (10).

7. Commande de soupape selon la revendication 6, **caractérisée en ce que** dans la troisième plaque de stator (9c) est prévu un passage (8) avec une zone dentée (20) qui est orienté aligné avec le premier et le deuxième passage (8).

8. Commande de soupape selon la revendication 6, **caractérisée en ce que** sur la troisième plaque de stator (9c) est placée au moins une paire de bobines électriques (18) sur lesquelles est placée une plaque terminale (9d) formant la deuxième zone terminale du stator (1).

9. Commande de soupape selon la revendication 1, **caractérisée en ce que** les éléments de guidage (13a, 13b) sont insérés soit dans des rainures (5) de la plaque de stator (9a, 9b, 9c), soit dans des rainures de la plaque de rotor (11).

10. Commande de soupape selon l'une des revendications précédentes, **caractérisée en ce que** chaque bobine électrique (18) est traversée par un noyau magnétique (15) en forme de barreau qui est en contact pour la fermeture du circuit magnétique, par ses extrémités, avec les plaques de stator (9a, 9b et 9c, 9d) faisant partie de la bobine électrique (18).

11. Commande de soupape selon la revendication 1, **caractérisée en ce que** plusieurs pièces magnétiques (21) sont reçues dans la plaque de rotor (11), en plusieurs rangées d'aimants (X1, X2) disposées parallèlement les unes au-dessus des autres, les rangées d'aimants étant inclinées par rapport à l'orientation horizontale de la zone dentée (20).

12. Commande de soupape selon la revendication 1, **caractérisée en ce que** plusieurs pièces magnétiques (21) sont reçues dans la plaque de rotor (11) en plusieurs rangées d'aimants (X1, X2) disposés parallèlement les uns au-dessus des autres, les rangées d'aimants (X1, X2) étant orientées horizontalement dans la plaque de rotor (11), tandis qu'au moins une paire de plaques de stator (9b, 9c), pourvues des zones dentées (20), est inclinée par rapport aux rangées d'aimants (X1, X2).

13. Commande de soupape selon la revendication 1, **caractérisée en ce que** la plaque de rotor (11) présente, entre deux barrettes de rotor (14), un trou oblong (6) qui, pour recevoir une première plaque de stator (9a) faisant partie du stator (1), est adapté avec jeu à la longueur et à l'épaisseur de la plaque de stator (9a).

14. Commande de soupape selon la revendication 13, **caractérisée en ce que** le jeu existant entre l'épaisseur de la plaque de stator (9a) et le trou oblong (6), est au moins aussi grand que la course de travail du rotor (12).
